# EUROPEAN PATENT APPLICATION

(11) **EP 4 123 639 A2**
(43) Date of publication of application: **25.01.2023**
(21) Application number: 22205815.8
(22) Date of filing: 07.11.2022
(51) Int. Cl.: G10L 15/22, G10L 17/26

(54) **WAKE-UP CONTROL FOR A SPEECH CONTROLLED DEVICE**

(30) Priority: 08.11.2021 CN 202111314250
(71) Applicant: Apollo Intelligent Connectivity (Beijing) Technology Co., Ltd., Beijing 100176 (CN)
(72) Inventor: ZHOU, Yi, Beijing, 100176 (CN)
(74) Representative: advotec.

(57) **Abstract**

The disclosure provides a speech control method, a speech control apparatus, and a storage medium, and relates to the field of computer technology. The method includes: obtaining a speech to be processed (S 101); obtaining a speech feature vector by performing feature analysis on the speech to be processed (S 102); determining whether the speech to be processed belongs to a target type based on the speech feature vector (SI03); and in response to the speech to be processed belonging to the target type, performing wake-up control on a target device based on the speech to be processed (S104). The target type, for example, is real human speech type, the determination may be done according to a frequency and timbre of speech.

## Description

### TECHNICAL FIELD

The disclosure relates to the field of computer technologies, especially to the field of Artificial Intelligence (AI) technologies such as Internet of Vehicles (IoV) and smart cockpits, and in particular to a speech control method, a speech control apparatus, an electronic device and a storage medium.

### BACKGROUND

Artificial Intelligence (AI) is the study of making computers to simulate certain human thinking processes and intelligent behaviors (such as learning, reasoning, thinking and planning), which has both hardware-level technologies and software-level technologies. AI hardware technologies generally include technologies such as sensors, dedicated AI chips, cloud computing, distributed storage, and big data processing. AI software technologies mainly include computer vision technology, speech recognition technology, natural language processing technology and machine learning, deep learning, big data processing technology, and knowledge graph technology.

In the related art, there may be a lot of interfering noises when waking up a speech device (e.g., a smart speaker and a smart watch), which may cause false wake-up of the speech device, thus the wake-up accuracy of the speech device is low.

### SUMMARY

The embodiments of the disclosure provide a speech control method, a speech control apparatus, an electronic device, a storage medium and a computer program product.

The present disclosure is defined in the independent claims, and the preferable features according to the present disclosure are defined in the dependent claims.

According to a first aspect of the disclosure, a speech control method is provided. The method includes: obtaining a speech to be processed; obtaining a speech feature vector by performing feature analysis on the speech to be processed; determining whether the speech to be processed belongs to a target type based on the speech feature vector; and performing wake-up control on a target device based on the speech to be processed in response to the speech to be processed belonging to the target type.

According to a second aspect of the disclosure, a speech control apparatus is provided. The apparatus includes: an obtaining module, an analyzing module, a first determining module and a wake-up module. The obtaining module is configured to obtain a speech to be processed. The analyzing module is configured to obtain a speech feature vector by performing feature analysis on the speech to be processed. The first determining module is configured to determine whether the speech to be processed belongs to a target type based on the speech feature vector. The wake-up module is configured to perform wake-up control on a target device based on the speech to be processed in response to the speech to be processed belonging to the target type.

According to a third aspect of the disclosure, an electronic device is provided. The electronic device includes: at least one processor and a memory communicatively coupled to the at least one processor. The memory stores instructions executable by the at least one processor, and when the instructions are executed by the at least one processor, the speech control method according to embodiments of the first aspect of the disclosure is implemented.

According to a fourth aspect of the disclosure, a non-transitory computer-readable storage medium having computer instructions stored thereon is provided. The computer instructions are configured to cause a computer to implement the speech control method according to embodiments of the first aspect of the disclosure.

According to a fifth aspect of the disclosure, a computer program product including computer programs is provided. When the computer programs are executed by a processor, the speech control method according to embodiments of the first aspect of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flow chart of a speech control method according to an embodiment of the disclosure.
FIG. 2 is a flow chart of a speech control method according to an embodiment of the disclosure.
FIG. 3 is a block diagram of a speech control apparatus according to an embodiment of the disclosure.
FIG. 4 is a block diagram of a speech control apparatus according to an embodiment of the disclosure.
FIG. 5 is a block diagram of an example electronic device used to implement the speech control method according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. For clarity and conciseness, descriptions of well-known functions and structures are omitted in the following description.

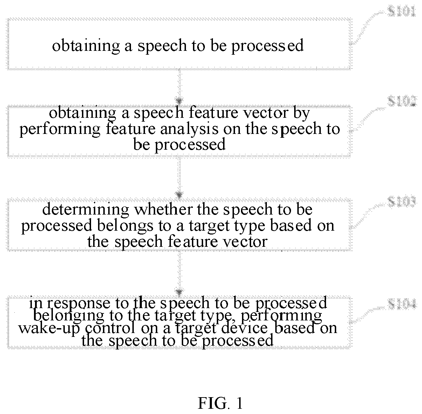

FIG. 1 is a flow chart of a speech control method according to an embodiment of the disclosure.

It should be noted that the executive body of the speech control method of the embodiment is a speech control apparatus, and the apparatus can be implemented by software and/or hardware. The apparatus may be configured in an electronic device, and the electronic device may include, but is not limited to, a terminal, a server, and the like.

The embodiment of the disclosure relates to the field of Artificial Intelligence (AI) technologies such as IoV and smart cockpits

AI is a new technical science that studies and develops theories, methods, technologies and application systems for simulating, extending and expanding human intelligence.

The concept of IoV derives from the Internet of Things (IoT). IoV takes moving vehicles as information perception objects, and uses the new generation of information communication technologies to realize the network connection between vehicles and vehicles, vehicles and people, vehicles and roads, and vehicles and service platforms, so as to improve overall intelligent driving level of vehicles and provide the users with safe, comfortable, intelligent and efficient driving experience and traffic services, while improving the traffic operation efficiency and the intelligence level of social traffic services.

The smart cockpit is equipped with intelligent/networked in-vehicle devices or services, such as a digital instrumentation, a large central control screen, a streaming media rearview mirror, a head-up display, an intelligent air conditioner, an intelligent ambient light, speech and visual interaction, which makes the interactive contents between "people-vehicle-road-cloud" richer, so that the information of each system could be fully integrated. Therefore, personalized definition can be realized, so that drivers and passengers can have a better experience.

It should be noted that the speech control method described in the embodiments of the disclosure can be implemented in an interaction scenario between a user and the speech device, or any other possible scenarios in which a certain type of speech is used to interact with the speech device, which is not limited in the disclosure.

The speech device refers to a device that can perform some basic operations and actions in response to a user's speech, for example, a smart speaker, an intelligent speech assistant, which is not limited.

For example, the user can realize the interaction between the user and the speech device by performing the speech wake-up control on the speech device through a speech. Optionally, in other possible scenarios mentioned above, the certain type of speech may be set adaptively, such as, a noise generated by a TV device, and a speech control command generated by an air conditioner. When the certain type of speech is the noise generated by the TV device, a type of the noise can be identified by the speech device to call a corresponding noise reduction algorithm to send a noise reduction command to the TV device. When the certain type of speech is the speech control command generated by the air conditioner, the speech device can identify a speech type of the speech control command to call a corresponding air conditioner control algorithm to send a corresponding control command to the air conditioner, which is not limited here.

In the embodiment of the disclosure, for example, the speech control method is implemented in the interaction scene between the user and the speech device which is not limited.

As illustrated in FIG. 1, the speech control method includes the following steps.

At block S101, a speech to be processed is obtained.

In the interaction scene between the user and the speech device, a detected speech in the scene can be called as the speech to be processed. The speech to be processed can be an independent speech segment collected by electronic devices with recording function such as a mobile phone and a microphone, or part of the speech segments of the collected speech. For example, the collected speech can be divided into multiple speech segments, and all or parts of the multiple speech segments can be used as the speech to be processed, which is not limited.

In the embodiment of the disclosure, obtaining the speech to be processed may be as following. The speech control device is pre-configured with a corresponding speech collecting module (e.g., a microphone), to collect multiple speeches to be processed in the environment where the speech control device is located (the multiple speeches to be processed can be human speeches in the environment, or other speeches in the environment, such as speeches broadcast by some electronic devices, which is not limited). The speeches to be processed can be processed accordingly, so that the speech control method of the embodiments of the disclosure can be implemented according to the speeches to be processed, which is not limited herein.

It should be noted that, in the embodiments of the disclosure, the process of acquiring, processing, storing and using the speech to be processed conforms to the provisions of relevant laws and regulations, and does not violate public order and good customs.

At block S102, a speech feature vector is obtained by performing feature analysis on the speech to be processed.

After obtaining the speech to be processed, the feature analysis can be performed on the speech to be processed to obtain the speech feature vector. The speech feature vector can be used to describe acoustic features of the speech to be processed.

In some embodiments, performing the feature analysis on the speech to be processed includes: inputting the speech to be processed into a pre-trained convolutional neural network to obtain speech feature vector output by the convolutional neural network. The process is not limited herein.

In some embodiments, the feature analysis is performed on the speech to be processed to obtain one or more speech features. The one or more speech features are mapped to a vector space for vectorization processing, to obtain one or more vector representations representing the one or more speech features in the vector space as the speech feature vector, which is not limited.

Certainly, it is also possible to perform the feature analysis on the speech to be processed in any other possible manner to obtain the speech feature vector.

At block S 103, it is determined whether the speech to be processed belongs to a target type based on the speech feature vector.

In the embodiment of the disclosure, a speech of the target type may be, for example, a real human speech, or speeches configured adaptively according to the requirements of actual speech control scene, such as, the noise generated by the TV device, and the speech control command generated by the air conditioner, which is not limited.

That is, the embodiment of the disclosure supports pre-configuration of types of speech that can wake up and interactively control the target device. The types can be, for example, the noise generated by the TV device, and the speech control command generated by the air conditioner. For each type, one or more speeches configured to trigger wake-up and interaction control are determined as the speeches of the target type. The speech of the target type can be used to match the collected speech to be processed. When the speech of the target type and the collected speech match with each other, the execution of corresponding speech control logic can be triggered, which is not limited.

In the embodiment of the disclosure, it is determined whether the speech to be processed belongs to the target type according to the speech feature vector.

For example, it is determined whether the speech to be processed is a real human speech according to the speech feature vector, or it is determined whether the speech to be processed is the noise generated by the TV device according to the speech feature vector, or it is determined whether the speech to be processed is the speech control command generated by the air conditioner according to the speech feature vector, which is not limited.

In some embodiments, determining whether the speech to be processed belongs to the target type according to the speech feature vector may be as following. A similarity between the speech to be processed and the target type of speech is obtained, and the similarity is compared with a preset similarity threshold value (the similarity threshold value can be adaptively configured according to the actual speech recognition and control scene). If the similarity is greater than or equal to the similarity threshold value, it is determined that the speech to be processed belongs to the target type.

In some embodiments, any other possible manner can also be used to determine whether the speech to be processed belongs to the target type according to the speech feature vector, which is not limited.

For example, a frequency of the speech to be processed and a frequency of the real human speech can be analyzed, if the frequency of the speech to be processed is consistent with the frequency corresponding to the real human speech, it is determined that the speech to be processed is a real human speech. The timbre of the speech to be processed is compared with the timbre of the real human speech, if the timbre of the speech to be processed is consistent with the timbre of the real human speech, it is determined that the speech to be processed is a real human speech, which is not limited.

Optionally, in other embodiments, determining whether the speech to be processed belongs to the target type based on the speech feature vector includes: inputting the speech feature vector into a feature matching model, to obtain an output result of the feature matching model, in which the output result includes a determination result on whether the speech to be processed is a real human speech. Since the feature matching model is configured to determine whether the speech to be processed is the target type speech, the determining and processing logic is simplified, and the determining efficiency is improved, thereby avoiding introducing other subjective determining factors and effectively improving the objectivity and accuracy of the judgment result of the speech to be processed.

The feature matching model is configured to determine whether the speech to be processed is the target type of speech. The feature matching model is generated by pre-training according to real human speech features, and the feature matching model can be an AI model, for example, a neural network model or a machine learning model. Certainly, any other possible AI model capable of performing feature matching can also be used, which is not limited.

That is, after the feature analysis is performed on the speech to be processed, the speech feature vector is obtained. The speech feature vector is input into the pre-trained feature matching model, and then it is determined whether the speech feature vector is within a feature interval range of the feature matching model. If the speech feature vector is within the feature interval range of the feature matching model, it is determined that the speech to be processed is the target type of speech, which is not limited.

At block S104, in response to the speech to be processed belonging to the target type, wake-up control is performed on a target device based on the speech to be processed.

A device on which the wake-up control is to be performed can be referred to as the target device.

When it is determined that the speech to be processed is the target type of speech, the wake-up control can be performed on the target device according to the speech to be processed, to realize speech recognition between the user and the target device.

In this embodiment, the speech to be processed is obtained. The speech feature vector is obtained by performing the feature analysis on the speech to be processed. Moreover, it is determined whether the speech to be processed belongs to the target type based on the speech feature vector. In response to the speech to be processed belonging to the target type, the wake-up control is performed on the target device based on the speech to be processed. Since the wake-up control is performed on the target device according to the type of the speech to be processed, false wake-up caused by other types of speech can be effectively avoided, so that the accuracy of waking up the device, and the effect of speech wake-up control are effectively improved.

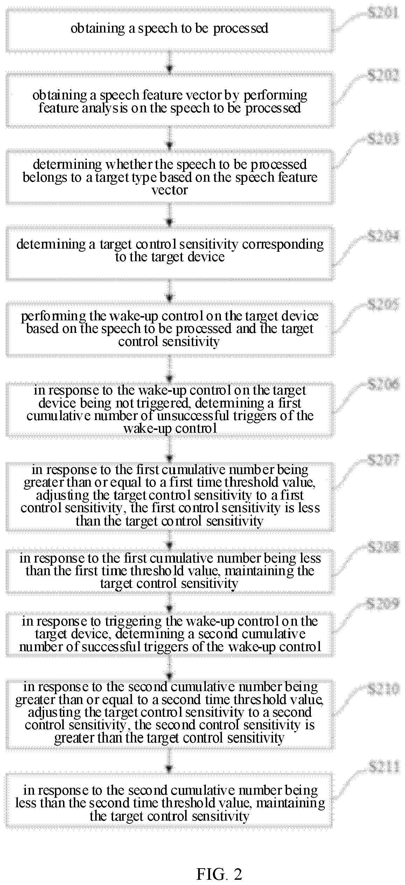

FIG. 2 is a flow chart of a speech control method according to an embodiment of the disclosure.

As illustrated in FIG. 2, the speech control method further includes the following steps.

At block S201, a speech to be processed is obtained.

At block S202, a speech feature vector is obtained by performing feature analysis on the speech to be processed.

At block S203, it is determined whether the speech to be processed belongs to a target type based on the speech feature vector.

For the description of S201-S203, reference may be made to the above embodiment, and details are not repeated here.

At block S204, a target control sensitivity corresponding to the target device is determined.

The target control sensitivity is used to describe a sensitivity of the wake-up control of the target device. The higher the target control sensitivity, the more sensitive the target device is to the recognition and control of the received speech. On the contrary, a low target control sensitivity indicates that the recognition and control of the received speech of the target device is relatively delayed.

At block S205, the wake-up control is performed on the target device based on the speech to be processed and the target control sensitivity.

In the embodiment of the disclosure, the wake-up control on the target device is performed based on the target control sensitivity, to improve the user's wake-up control experience. That is, in application scenarios where the wake-up control on the target device is required frequently (for example, when the user has a high demand for interacting with the target device), the target device can be controlled to maintain a high target control sensitivity, so as to facilitate the user to wake up the target device quickly and agilely, thereby effectively reducing the wake-up duration and effectively improving the wake-up efficiency. Correspondingly, in application scenarios where the wake-up control on the target device is not required frequently (for example, when the user does not need to interact with the target device), the target device can be controlled to maintain a low target control sensitivity, and at this time, the target device is not sensitive to a received speech, so that false wake-up can be effectively avoided, thereby effectively improving the user's interaction experience.

In some embodiments, performing the wake-up control on the target device according to the target control sensitivity and the speech to be processed may be as follows. The wake-up control on the target device is performed according to a preset sensitivity threshold value (the sensitivity threshold value can be adaptively configured according to the user's wake-up control needs) and the speech to be processed.

For example, when the target control sensitivity is greater than or equal to the sensitivity threshold value, the wake-up control on the target device is performed based on the speech to be processed, or the wake-up control on the target device is performed based on the speech to be processed and a control coefficient generated according to the target control sensitivity, which is not limited.

Optionally, in some embodiments, performing the wake-up control on the target device based on the speech to be processed and the target control sensitivity may be as follows.. The speech to be processed is divided into a plurality of speech segments, and a plurality of feature sub-vectors corresponding to the plurality of speech segments respectively are obtained by parsing the speech feature vector. Then a plurality of speech scores corresponding to the plurality of feature sub-vectors respectively are determined based on the target control sensitivity. The wake-up control on the target device is performed based on the plurality of speech scores. Therefore, the speech to be processed is divided into the plurality of speech segments firstly, and the speech scores corresponding to the feature sub-vectors of the speech segments obtained by dividing the speech to be processed are obtained, then the wake-up control on the target device is performed based on the speech scores. The speech score can be used to express a similarity between a feature of the speech segment and a feature of the speech that can trigger the wake-up control on the target device, thus, when the wake-up control on the target device is performed based on the speech scores, it is possible to focus on the speech to be processed with a high feature similarity, thereby effectively ensuring the accuracy of wake-up control on the target device.

A feature vector corresponding to each speech segment obtained by analyzing the speech feature vector can be called a feature sub-vector, that is, the plurality of feature sub-vectors together constitute the speech feature vector.

That is, after obtaining the speech to be processed, the speech to be processed can be divided into the plurality of speech segments. The plurality of feature sub-vectors corresponding to the plurality of speech segments are obtained by parsing the speech feature vector. A plurality of score results corresponding to the plurality of feature sub-vectors are obtained by scoring the feature sub-vectors based on the target control sensitivity. The score results can be called the speech scores, and the speech scores can be used to describe the similarity between the features of the speech segments and the feature of the speech that can trigger wake-up control on the target device. The higher the speech score, the easier it is to trigger the wake-up control on the target device. On the contrary, the lower the speech score, the less likely it is to trigger the wake-up control on the target device.

Optionally, in some embodiments, feature analysis can be performed on the speech segments to obtain the speech features respectively corresponding to the speech segments. The speech features of the speech segments can be mapped to a vector space corresponding to the speech feature vector for vectorization processing, to obtain the vector representations representing the speech features corresponding to the speech segments in the vector space as the feature sub-vectors.

In other embodiments, it is also possible to input the speech feature vector and the speech segments into a pre-trained feature analysis model, to obtain the feature sub-vectors corresponding to the speech segments output by the feature analysis model, which is not limited.

Optionally, in some embodiments, determining the plurality of speech scores corresponding to the plurality of feature sub-vectors based on the target control sensitivity may include: inputting the target control sensitivity and the feature sub-vectors into a pre-trained speech scoring model, to obtain the plurality of speech scores corresponding to the plurality of speech feature sub-vector output by the pre-trained speech scoring model. Optionally, a similarity between each feature sub-vector and the feature of a speech that can trigger wake-up control on the target device can be determined based on the target control sensitivity, and the obtained similarities are determined as the speech scores corresponding to the feature sub-vectors, to realize the implementation of determining the speech scores corresponding to the feature sub-vectors based on the target control sensitivity. The above process is not limited.

After determining the speech scores corresponding to the feature sub-vectors based on the target control sensitivity, the wake-up control can be performed on the target device based on the speech scores.

Optionally, in some embodiments, performing the wake-up control on the target device according to the speech scores may include the following. A control score is generated based on the plurality of speech scores. In response to the control score being greater than or equal to a score threshold value, the wake-up control on the target device is triggered. In response to the control score being less than the score threshold value, the wake-up control on the target device is not triggered. The control score is generated according to the speech to be processed, the wake-up control on the target device is not triggered when the control score is less than the score threshold value, thereby effectively avoiding false wake-up, and meeting personalized wake-up control requirements of different speech control scenarios by supporting adjustment and configuration of the score threshold value.

A score used to control the target device can be referred to as the control score.

In some embodiments, generating the control score according to the plurality of speech scores may include: inputting the plurality of speech scores into a pre-trained neural network model to obtain the control score output by the pre-trained neural network model.

Alternatively, the plurality of speech scores may be divided into a plurality of speech score intervals, and a control score corresponding to each of the plurality of speech score intervals is determined. Correspondingly, generating the control score according to the plurality of speech scores may include: determining a score interval corresponding to each speech score, and determining the control score corresponding to the score interval as the control score corresponding to the corresponding speech score, which is not limited.

For example, the plurality of speech scores can be divided into two speech score intervals, i.e., (0-5) and (5-10) according to the values of the speech scores, and a control score of the (0-5) speech score interval is A, a control score of the (5-10) speech score interval is B. Generating the control score according to the speech scores may be as follows. If it is determined that a speech score interval corresponding to the speech score 4 is (0-5), the control score A may be used as the control score corresponding to the speech score 4.

The pre-set critical value of the control score can be referred to as the score threshold value, and the score threshold value can assist in the wake-up control on the target device. That is, when the control score is greater than or equal to the score threshold value, the wake-up control on the target device is triggered. When the control score is less than the score threshold value, the wake-up control on the target device is not triggered, which is not limited.

In other embodiments, performing the wake-up control on the target device according to the speech scores may be as follows. A corresponding wake-up control instruction is generated according to each of the plurality of speech scores, and the target device may choose to maintain the wake-up state or non-wake-up state in response to a corresponding wake-up control instruction, which is not limited.

At block S206, in response to the wake-up control on the target device being not triggered, a first cumulative number of unsuccessful triggers of the wake-up control is determined.

In the embodiment of the disclosure, if the wake-up control on the target device is not triggered, the number of times not triggering the wake-up control can be cumulated, to obtain the first cumulative number. The first cumulative number can be used to describe the number of situations that the wake-up control on the target device is not triggered.

At block S207, in response to the first cumulative number being greater than or equal to a first time threshold value, the target control sensitivity is adjusted to a first control sensitivity, in which the first control sensitivity is less than the target control sensitivity.

A preset threshold value of the number of situations that the wake-up control is not triggered can be called the first time threshold value, and the first time threshold value can be adaptively set according to the wake-up control requirements of the actual wake-up control scenario, which is not limited.

In the embodiment of the disclosure, after determining the first cumulative number of unsuccessful triggers of the wake-up control, the first cumulative number may be compared with the first time threshold value. When the first cumulative number is greater than or equal to the first time threshold value, the target control sensitivity can be adjusted, and the adjusted target control sensitivity is determined as the first control sensitivity, which is less than the target control sensitivity.

That is, when the first cumulative number is greater than or equal to the first time threshold value, it indicates that it is currently in an application scenario that does not require frequent awakening the target device, that is, the user's current interaction requirement on the target device is relatively low, and at this time, the target control sensitivity can be adjusted to the first control sensitivity.

At block S208, in response to the first cumulative number being less than the first time threshold value, the target control sensitivity is maintained.

That is, after determining the first cumulative number of unsuccessful triggers of the wake-up control, the first cumulative number can be compared with the preset first time threshold value, if the first cumulative number is less than the first time threshold value, the target control sensitivity is maintained.

In the embodiment of the disclosure, the first cumulative number of unsuccessful triggers of the wake-up control is determined. When the first cumulative number is greater than or equal to the first time threshold value, the target control sensitivity is adjusted to the first control sensitivity. When the first cumulative number is less than the first time threshold value, the target control sensitivity is maintained. Therefore, when the user's interactive requirements for the target device is low, the wake-up sensitivity of the target device can be reduced, so that invalid wake-up can be effectively avoided while effectively ensuring the user's interactive requirements for the target device, thereby effectively enhancing the user's interaction experience.

At block S209, in response to triggering the wake-up control on the target device, a second cumulative number of successful triggers of the wake-up control is determined.

In the embodiment of the disclosure, if the wake-up control on the target device is successfully triggered, a number of situations that the wake-up control on the target device is successfully triggered can be cumulated to obtain the second cumulative number, which may be used to describe the number of situations that the wake-up control on the target device is successfully triggered.

At block S210, in response to the second cumulative number being greater than or equal to a second time threshold value, the target control sensitivity is adjusted to a second control sensitivity, in which the second control sensitivity is greater than the target control sensitivity.

A pre-set threshold value of the number of successful triggers of the wake-up control on the target device can be called the second cumulative number. The second time threshold value can be adaptively configured according to the wake-up control requirements of the actual wake-up control scenario, which is not limited.

In the embodiment of the disclosure, after determining the second cumulative number of successful triggers of the wake-up control, the second cumulative number may be compared with the preset second time threshold value. If the second cumulative number is greater than or equal to the second time threshold value, the target control sensitivity can be adjusted accordingly, and the adjusted control sensitivity is determined as the second control sensitivity, and the second control sensitivity is greater than the target control sensitivity.

That is, when the second cumulative number is greater than or equal to the second time threshold value, it indicates that it is currently in an application scenario that requires frequent awakening the target device, that is, the user's current interaction requirement on the target device is relatively high, and at this time, the target control sensitivity can be adjusted to the second control sensitivity, to meet the user's interaction requirements.

At block S211, in response to the second cumulative number being less than the second time threshold value, the target control sensitivity is maintained.

In the embodiment of the disclosure, after determining the second cumulative number of successful triggers of the wake-up control, the second cumulative number may be compared with the preset second time threshold value. If the second cumulative number is less than the second time threshold value, the target control sensitivity is maintained.

In the embodiment of the disclosure, the second cumulative number of successful triggers of the wake-up control is determined. When the second cumulative number is greater than or equal to the second time threshold value, the target control sensitivity is adjusted to the second control sensitivity. When the second cumulative number is smaller than the second time threshold value, the target control sensitivity is maintained. In this way, when the user's interaction requirements for the target device is high, the wake-up sensitivity of the target device can be improved, so that the target device can quickly respond to the user's wake-up control requirements, thereby effectively reducing the response duration of wake-up control on the target device. Therefore, it is possible to efficiently perform wake-up control on the target device, so as to effectively meet the user's interaction requirements, and effectively improve the user experience.

In this embodiment, the speech to be processed is obtained. The speech feature vector is obtained by performing the feature analysis on the speech to be processed. Moreover, it is determined whether the speech to be processed belongs to the target type based on the speech feature vector. The wake-up control is performed on the target device according to the target control sensitivity and the speech to be processed, to improve the user's wake-up control experience. The first cumulative number of unsuccessful triggers of the wake-up control is determined. In response to the first cumulative number being greater than or equal to the first time threshold value, the target control sensitivity is adjusted to the first control sensitivity. In response to the first cumulative number being less than the first time threshold value, the target control sensitivity is maintained. In this way, when the user's interactive requirements for the target device is low, the wake-up sensitivity of the target device can be reduced, so that invalid wake-up can be effectively avoided while effectively ensuring the user's interactive requirements for the target device, thereby improving the user interaction experience. The second cumulative number of successful triggers of the wake-up control is determined. In response to the second cumulative number being greater than or equal to the second time threshold value, the target control sensitivity is adjusted to the second control sensitivity. In response to the second cumulative number being less than the second time threshold value, the target control sensitivity is maintained. Therefore, when the user's interactive requirements for the target device is high, the wake-up sensitivity of the target device can be improved, so that the target device can quickly respond to the user's wake-up control requirements, thereby effectively reducing the response duration of the wake-up control on the target device. In this way, the efficient wake-up control on the target device can be effectively realized, the user's interaction requirements can be effectively met, thereby effectively improving the user experience.

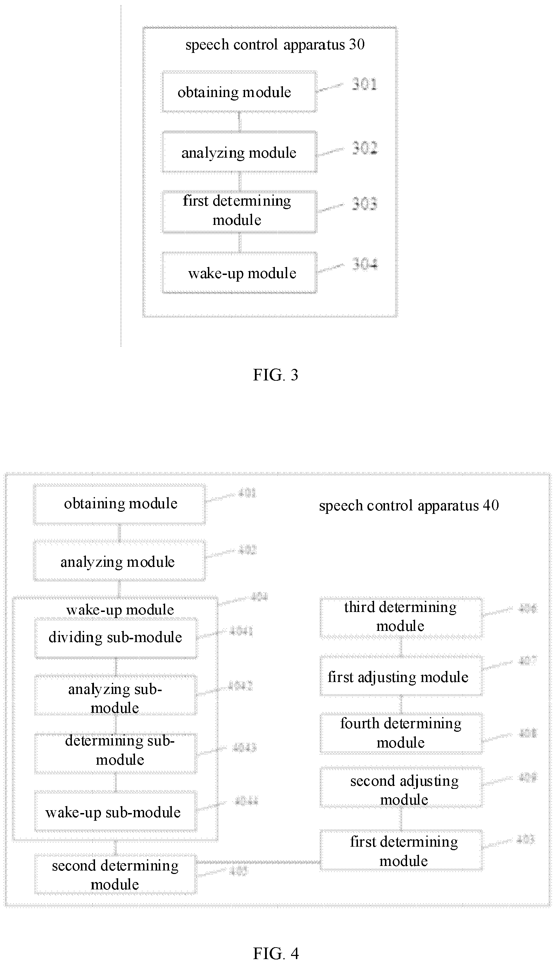

FIG. 3 is a block diagram of a speech control apparatus according to an embodiment of the disclosure.

As illustrated in FIG. 3, the speech control apparatus 30 includes: an obtaining module 301, an analyzing module 302, a first determining module 303 and a wake-up module 304.

The obtaining module 301 is configured to obtain a speech to be processed.

The analyzing module 302 is configured to obtain a speech feature vector by performing feature analysis on the speech to be processed.

The first determining module 303 is configured to determine whether the speech to be processed belongs to a target type based on the speech feature vector.

The wake-up module 304 is configured to, in response to the speech to be processed belonging to the target type, perform wake-up control on a target device based on the speech to be processed.

In some embodiments of the disclosure, as illustrated in FIG. 4, FIG. 4 is a block diagram of a speech control apparatus according to an embodiment of the disclosure. The speech control apparatus 40 includes: an obtaining module 401, an analyzing module 402, a first determining module 403 and a wake-up module 404. The speech control apparatus 40 further includes: a second determining module 405.

The second determining module 405 is configured to, after determining whether the speech to be processed belongs to the target type based on the speech feature vector, determine a target control sensitivity corresponding to the target device.

The wake-up module 404 is further configured to perform the wake-up control on the target device based on the speech to be processed and the target control sensitivity.

In some embodiments of the disclosure, the wake-up module 404 includes: a dividing sub-module 4041, an analyzing sub-module 4042, a determining sub-module 4043 and a wake-up sub-module 4044.

The dividing sub-module 4041 is configured to divide the speech to be processed into a plurality of speech segments.

The analyzing sub-module 4042 is configured to obtain a plurality of feature sub-vectors respectively corresponding to the plurality of speech segments by parsing the speech feature vector.

The determining sub-module 4043 is configured to determine a plurality of speech scores respectively corresponding to the plurality of feature sub-vectors based on the target control sensitivity.

The wake-up sub-module 4044 is configured to perform the wake-up control on the target device based on the plurality of speech scores.

In some embodiments of the disclosure, the wake-up sub-module 4044 is further configured to:
generate a control score based on the plurality of speech scores;
in response to the control score being greater than or equal to a score threshold value, trigger the wake-up control on the target device; and
in response to the control score being less than the score threshold value, not trigger the wake-up control on the target device.

In some embodiments of the disclosure, the target type is a real human type, and the first determining module 403 is further configured to: input the speech feature vector into a feature matching model, to obtain an output result of the feature matching model, in which the output result includes a determination result on whether the speech to be processed belongs to the real human type.

In some embodiments of the disclosure, the speech control apparatus 40 further includes: a third determining module 406 and a first adjusting module 407.

The third determining module 406 is configured to, after performing the wake-up control on the target device based on the speech to be processed, in response to the wake-up control on the target device being not triggered, determine a first cumulative number of unsuccessful triggers of the wake-up control.

The first adjusting module 407 is configured to, in response to the first cumulative number being greater than or equal to a first time threshold value, adjust the target control sensitivity to a first control sensitivity, in which the first control sensitivity is less than the target control sensitivity; and in response to the first cumulative number being less than the first time threshold value, maintain the target control sensitivity.

In some embodiments of the disclosure, the speech control apparatus 40 further includes: a fourth determining module 408 and a second adjusting module 409.

The third determining module 408 is configured to, after performing the wake-up control on the target device based on the speech to be processed, in response to triggering the wake-up control on the target device, determine a second cumulative number of successful triggers of the wake-up control.

The second adjusting module 409 is configured to, in response to the second cumulative number being greater than or equal to a second time threshold value, adjust the target control sensitivity to a second control sensitivity, in which the second control sensitivity is greater than the target control sensitivity; and in response to the second cumulative number being less than the second time threshold value, maintain the target control sensitivity.

It can be understood that the speech control device 40 in FIG. 4 of this embodiment and the speech control device 30 in the above embodiment, the obtaining module 401 and the obtaining module 301 in the above embodiment, the analyzing module 402 and the analyzing module 302, the determining module 403 and the determining module 303 in the above embodiment, and the wake-up module 404 and the wake-up module 304 in the above embodiment, may have the same function and structure.

It should be noted that the above explanation of the speech control method is also applicable to the speech control apparatus of this embodiment.

In this embodiment, the speech to be processed is obtained. The speech feature vector is obtained by performing the feature analysis on the speech to be processed. Moreover, it is determined whether the speech to be processed belongs to the target type based on the speech feature vector. In response to the speech to be processed belonging to the target type, the wake-up control is performed on the target device based on the speech to be processed. Since the wake-up control is performed on the target device according to the type of the speech to be processed, false wake-up caused by other types of speech can be effectively avoided, so that the accuracy of waking up the device, and the effect of speech wake-up control are effectively improved.

According to the embodiments of the disclosure, the disclosure provides an electronic device, a readable storage medium and a computer program product.

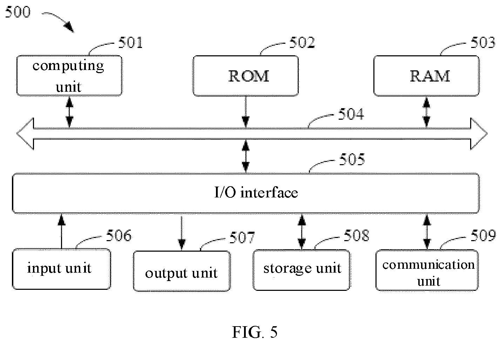

FIG. 5 is a block diagram of an example electronic device 500 used to implement the speech control method according to the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 5, the electronic device 500 includes: a computing unit 501 performing various appropriate actions and processes based on computer programs stored in a read-only memory (ROM) 502 or computer programs loaded from the storage unit 508 to a random access memory (RAM) 503. In the RAM 503, various programs and data required for the operation of the device 500 are stored. The computing unit 501, the ROM 502, and the RAM 503 are connected to each other through a bus 504. An input/output (I/O) interface 505 is also connected to the bus 504.

Components in the device 500 are connected to the I/O interface 505, including: an inputting unit 506, such as a keyboard, a mouse; an outputting unit 507, such as various types of displays, speakers; a storage unit 508, such as a disk, an optical disk; and a communication unit 509, such as network cards, modems, and wireless communication transceivers. The communication unit 509 allows the device 500 to exchange information/data with other devices through a computer network such as the Internet and/or various telecommunication networks.

The computing unit 501 may be various general-purpose and/or dedicated processing components with processing and computing capabilities. Some examples of computing unit 501 include, but are not limited to, a CPU, a graphics processing unit (GPU), various dedicated AI computing chips, various computing units that run machine learning model algorithms, and a digital signal processor (DSP), and any appropriate processor, controller and microcontroller. The computing unit 501 executes the various methods and processes described above, such as the speech control method. For example, in some embodiments, the method may be implemented as a computer software program, which is tangibly contained in a machine-readable medium, such as the storage unit 508. In some embodiments, part or all of the computer program may be loaded and/or installed on the device 500 via the ROM 502 and/or the communication unit 509. When the computer program is loaded on the RAM 503 and executed by the computing unit 501, one or more steps of the method described above may be executed. Alternatively, in other embodiments, the computing unit 501 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and the block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve defects such as difficult management and weak business scalability in the traditional physical host and Virtual Private Server (VPS) service. The server may also be a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A speech control method, comprising:
obtaining a speech to be processed (S101);
obtaining a speech feature vector by performing feature analysis on the speech to be processed (S102);
determining whether the speech to be processed belongs to a target type based on the speech feature vector (S103); and
performing wake-up control on a target device based on the speech to be processed in response to the speech to be processed belonging to the target type (S104).

2. The method of claim 1, after determining whether the speech to be processed belongs to the target type based on the speech feature vector (S103), further comprising:
determining a target control sensitivity corresponding to the target device (S204);
wherein, performing the wake-up control on the target device based on the speech to be processed (S104) comprises:
performing the wake-up control on the target device based on the speech to be processed and the target control sensitivity (S205).

3. The method of claim 2, wherein performing the wake-up control on the target device based on the speech to be processed and the target control sensitivity (S104), comprises:
dividing the speech to be processed into a plurality of speech segments;
obtaining a plurality of feature sub-vectors respectively corresponding to the plurality of speech segments by parsing the speech feature vector;
determining a plurality of speech scores respectively corresponding to the plurality of feature sub-vectors based on the target control sensitivity; and
performing the wake-up control on the target device based on the plurality of speech scores.

4. The method of claim 3, wherein performing the wake-up control on the target device based on the plurality of speech scores, comprises:
generating a control score based on the plurality of speech scores;
triggering the wake-up control on the target device in response to the control score being greater than or equal to a score threshold value; and
not triggering the wake-up control on the target device in response to the control score being less than the score threshold value.

5. The method of claim 3 or 4, wherein the target type is a real human type, and determining whether the speech to be processed belongs to the target type based on the speech feature vector (S103), comprises:
inputting the speech feature vector into a feature matching model, to obtain an output result of the feature matching model, wherein the output result comprises a determination result on whether the speech to be processed belongs to the real human type.

6. The method of any of claims 2 to 5, after performing the wake-up control on the target device based on the speech to be processed (S104), further comprising:
determining a first cumulative number of unsuccessful triggers of the wake-up control in response to the wake-up control on the target device being not triggered (S206);
adjusting the target control sensitivity to a first control sensitivity in response to the first cumulative number being greater than or equal to a first time threshold value, wherein the first control sensitivity is less than the target control sensitivity (S207); and
maintaining the target control sensitivity in response to the first cumulative number being less than the first time threshold value (S208).

7. The method of any of claims 2 to 6, after performing the wake-up control on the target device based on the speech to be processed (S104), further comprising:
determining a second cumulative number of successful triggers of the wake-up control in response to triggering the wake-up control on the target device (S209);
adjusting the target control sensitivity to a second control sensitivity in response to the second cumulative number being greater than or equal to a second time threshold value, wherein the second control sensitivity is greater than the target control sensitivity (S210); and
maintaining the target control sensitivity in response to the second cumulative number being less than the second time threshold value (S211).

8. A speech control apparatus (30), comprising:
an obtaining module (301), configured to obtain a speech to be processed;
an analyzing module (302), configured to obtain a speech feature vector by performing feature analysis on the speech to be processed;
a first determining module (303), configured to determine whether the speech to be processed belongs to a target type based on the speech feature vector; and
a wake-up module (304), configured to perform wake-up control on a target device based on the speech to be processed in response to the speech to be processed belonging to the target type.

9. The apparatus (40) of claim 8, further comprising:
a second determining module (405), configured to, after determining whether the speech to be processed belongs to the target type based on the speech feature vector, determine a target control sensitivity corresponding to the target device;
wherein, the wake-up module (404) is further configured to perform the wake-up control on the target device based on the speech to be processed and the target control sensitivity.

10. The apparatus (40) of claim 9, wherein the wake-up module (404) comprises:
a dividing sub-module (4041), configured to divide the speech to be processed into a plurality of speech segments;
an analyzing sub-module (4042), configured to obtain a plurality of feature sub-vectors respectively corresponding to the plurality of speech segments by parsing the speech feature vector;
a determining sub-module (4043), configured to determine a plurality of speech scores respectively corresponding to the plurality of feature sub-vectors based on the target control sensitivity; and
a wake-up sub-module (4045), configured to perform the wake-up control on the target device based on the plurality of speech scores.

11. The apparatus (40) of claim 10, wherein the wake-up sub-module (4045) is further configured to:
generate a control score based on the plurality of speech scores;
trigger the wake-up control on the target device in response to the control score being greater than or equal to a score threshold value; and
not trigger the wake-up control on the target device in response to the control score being less than the score threshold value.

12. The apparatus (40) of claim 10 or 11, wherein the target type is a real human type, and the first determining module (403) is further configured to:
input the speech feature vector into a feature matching model, to obtain an output result of the feature matching model, wherein the output result comprises a determination result on whether the speech to be processed belongs to the real human type.

13. The apparatus (40) of any of claims 9 to 12, further comprising:
a third determining module (406), configured to, after performing the wake-up control on the target device based on the speech to be processed, determine a first cumulative number of unsuccessful triggers of the wake-up control in response to the wake-up control on the target device being not triggered; and
a first adjusting module (407), configured to, adjust the target control sensitivity to a first control sensitivity in response to the first cumulative number being greater than or equal to a first time threshold value, wherein the first control sensitivity is less than the target control sensitivity; and maintain the target control sensitivity in response to the first cumulative number being less than the first time threshold value.

14. The apparatus (40) of any of claims 9 to 13, further comprising:
a fourth determining module (408), configured to, after performing the wake-up control on the target device based on the speech to be processed, determine a second cumulative number of successful triggers of the wake-up control in response to triggering the wake-up control on the target device; and
a second adjusting module (409), configured to, adjust the target control sensitivity to a second control sensitivity in response to the second cumulative number being greater than or equal to a second time threshold value, wherein the second control sensitivity is greater than the target control sensitivity; and maintain the target control sensitivity in response to the second cumulative number being less than the second time threshold value.

15. A non-transitory computer-readable storage medium having computer instructions stored thereon, wherein the computer instructions are configured to cause a computer to implement the method of any one of claims 1-7.
